# DEMANDE DE BREVET EUROPEEN

(11) **EP 1 447 736 A1**
(43) Date de publication de la demande: **18.08.2004**
(21) Numéro de dépôt: 04358001.8
(22) Date de dépôt: 02.02.2004
(51) Int. Cl.: G06F 1/32

(54) **Microprocesseur comprenant des modes de fonctionnement à faible consommation électrique**

(30) Priorité: 06.02.2003 FR 0301420
(71) Demandeur: STMicroelectronics, 92120 Montrouge (FR)
(72) Inventeur: Durand, Benoît, 13290 Les Milles (FR); Lacan, Jérôme, 13100 Aix-en-Provence (FR)
(74) Mandataire: Marchand, André

(57) **Abrégé**

La présente invention concerne un circuit intégré comprenant une unité centrale (CPU) cadencée par un signal d'horloge (CLK), un circuit d'oscillateur principal (OSC1) fournissant un premier signal d'horloge (CK1) et un circuit périphérique (AWUCT) fournissant un signal d'activation périodique (WUIT). L'unité centrale comporte un premier mode de fonctionnement à pleine puissance, dans lequel le premier signal d'horloge (CK1) est appliqué à l'unité centrale, et un mode d'arrêt actif dans lequel le circuit d'oscillateur principal et l'unité centrale sont désactivés. Un circuit d'oscillateur secondaire (OSC2) fournit un second signal d'horloge (CK2) de fréquence inférieure au premier signal d'horloge (CK1). Un circuit (ASC) de gestion de signaux d'horloge, lors de la réactivation de l'unité centrale à l'issue du mode d'arrêt actif, active le circuit d'oscillateur secondaire (OSC2) et applique le second signal d'horloge (CK2) à l'unité centrale (CPU) de façon à cadencer l'unité centrale avec le second signal d'horloge, pour obtenir un deuxième mode de fonctionnement à consommation électrique réduite.

## Description

La présente invention concerne les microprocesseurs et plus particulièrement la génération de signaux d'horloge dans les microprocesseurs et les modes de fonctionnement des microprocesseurs.

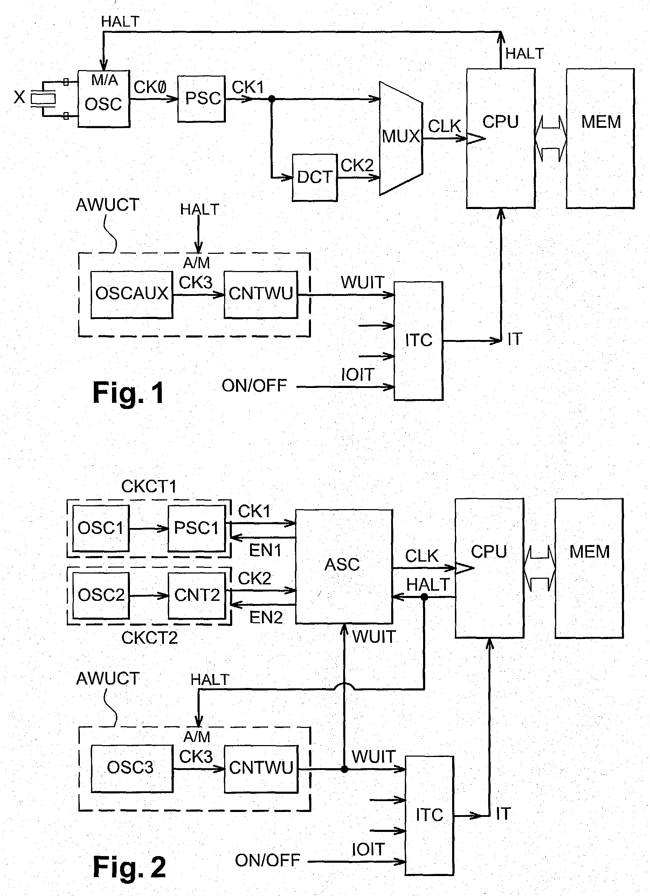

La figure 1 représente la structure d'un microprocesseur classique. Le microprocesseur comprend une unité centrale de traitement CPU pour effectuer les opérations de programme en liaison avec une mémoire MEM permettant de stocker les données et les instructions de programme. Le fonctionnement du CPU est cadencé par un signal d'horloge principal CLK issu d'un circuit de génération d'horloge comportant un circuit d'oscillateur OSC à quartz X. Un circuit diviseur de fréquence PSC (prescaler) abaisse la fréquence du signal CK0 issu de l'oscillateur OSC et délivre le signal d'horloge principal CK1 qui détermine la fréquence nominale de travail du CPU. Un autre circuit DCT diviseur de fréquence DCT, est placé en dérivation sur la ligne du signal d'horloge principal CK1 pour fournir un autre signal d'horloge CK2 de fréquence inférieure au signal d'horloge CK1. Un circuit multiplexeur reçoit les deux signaux d'horloge CK1, CK2 pour appliquer l'un des deux signaux sélectionnés CK1 ou CK2 en entrée de signal d'horloge CLK du CPU.

L'unité centrale CPU contrôle le fonctionnement de l'oscillateur OSC par un signal de commande HALT appliqué en commande de marche/arrêt M/A sur le circuit d'oscillateur OSC. Quand le CPU active le signal HALT, l'oscillateur OSC s'éteint et il n'y a plus de signal d'horloge, si bien que le fonctionnement du CPU s'interrompt.

Parallèlement, le signal HALT est appliqué en commande de mise en marche A/M d'un circuit auxiliaire AWUCT de réactivation automatique (Auto Wake-Up) du microprocesseur. Ce circuit autonome AWUCT comprend généralement son propre circuit d'oscillateur OSCAUX dont les impulsions de signal CK3 sont appliquées à un circuit de comptage CNTAWU pour générer une impulsion de signal WUIT à la fin d'un intervalle de temps de durée prédéfinie déterminant une base de temps de réactivation périodique. Le signal WUIT est appliqué en tant que signal d'interruption sur un circuit de décodage d'interruption ITC. Le circuit ITC reçoit, masque et code les signaux d'interruption provenant de diverses sources, comme le bouton de commande générale de mise en service/hors service ON/OFF (interruption IOIT de remise à zéro ou RESET) et le signal de base de temps WUIT du circuit de réactivation automatique AWUCT, seuls représentés ici.

De façon classique, ces circuits périphériques permettent au microprocesseur de disposer de plusieurs modes de fonctionnement, dans le but globalement de réduire la consommation de courant électrique du circuit.

Un microprocesseur tel que celui de la figure 1, dispose d'un mode de fonctionnement normal à pleine puissance, ou mode RUN, d'un mode de fonctionnement lent ou mode SLOW, et d'un mode de veille ou mode ACTIVE HALT.

Dans le mode RUN, tous les circuits du microprocesseur sont activés et fonctionnent à la fréquence nominale du signal d'horloge principal CK1, donc à pleine puissance. Le mode RUN a l'inconvénient de nécessiter une puissance électrique considérable puisque tous les circuits du microprocesseur sont activés à leur fréquence nominale, très élevée (la consommation d'un circuit intégré est essentiellement fonction de la cadence de commutation des transistors).

Dans le mode SLOW, le CPU travaille à la fréquence réduite du signal d'horloge secondaire CK2 (sous-multiple de la fréquence CK1) si bien que la consommation électrique est divisée. La consommation électrique reste cependant importante puisque l'unité centrale et tous les circuits périphériques sont actifs, notamment le circuit OSC d'oscillateur à quartz, qui occupe un poste de consommation importante.

Le mode HALT est mis en oeuvre pour éviter cet excès de consommation, lorsque le CPU est en attente, sans opération particulière à effectuer. Dans ce cas, le CPU applique la commande HALT à l'oscillateur OSC, ce qui interrompt les signaux d'horloge et le fonctionnement du CPU lui-même. Ainsi dans le mode HALT, l'unité centrale et les circuits périphériques sont désactivés pour limiter la consommation électrique, à l'exception du circuit auxiliaire AWUCT activé par la commande HALT, afin de réactiver le CPU à intervalles de temps réguliers pour veiller aux opérations à effectuer. A la fin de chaque intervalle de temps, une impulsion du signal WUIT génère une interruption IT qui "réveille" le CPU et réactive son fonctionnement dans le mode d'exécution RUN.

Plus précisément, au moment de l'impulsion WUIT, l'oscillateur OSC est réactivé par la fin du mode HALT et recommence à produire le signal CK0. Au démarrage, l'établissement des oscillations du circuit OSC1 nécessite un délai de stabilisation. Un circuit compte un nombre N fixe de cycles du signal CK1 pour déterminer la durée de la phase de stabilisation. A la fin de cette phase STAB, le CPU reprend son fonctionnement normal dans le mode RUN à la cadence du signal d'horloge principal CK1.

Lors de cette réactivation du CPU dans le mode RUN, le CPU scrute les entrées/sorties, vérifie certains états, exécute des routines de sous-programme, et détermine s'il y a des opérations à effectuer.

Dans l'affirmative, le CPU maintient son mode de fonctionnement RUN à pleine puissance et exécute le programme d'opérations à effectuer.

Dans le cas d'absence d'opération à effectuer, le CPU retourne dans le mode HALT en réactivant le signal HALT pour recommencer un nouveau cycle.

Ainsi, dans les microprocesseurs de type connu, lors du fonctionnement dans le mode d'arrêt HALT, à chaque réactivation périodique, le CPU, les circuits d'horloge et tous les circuits périphériques doivent se réactiver dans le mode d'exécution RUN pendant un certain nombre de cycles d'horloge, même s'il s'avère qu'il n'y a pas d'opération à effectuer, ce qui représente un excès de consommation injustifiée.

Le défaut des microprocesseurs décrits précédemment est de nécessiter un nombre élevé de cycles de stabilisation lors de la réactivation du circuit d'horloge principal et du CPU. Typiquement, selon les modèles de microprocesseur, il faut attendre une durée de l'ordre de 2⁸ à 2¹⁴ cycles d'horloge (N=256 à 16384 cycles) pour achever la phase de stabilisation de l'oscillateur, ce qui représente un nombre de cycles d'opérations considérable.

Or, la durée du délai de stabilisation des oscillateurs de précision à quartz est inséparable du degré de précision de la fréquence des oscillations du signal d'horloge, dont dépend par exemple l'exactitude de l'heure interne du microprocesseur (plus le degré de précision sur la périodicité d'un signal est élevé, plus le temps d'établissement de ce signal périodique est long).

L'inconvénient de cet état de la technique est que les circuits de l'oscillateur et de l'unité centrale consomment une puissance électrique importante pendant ce délai de stabilisation, inutilement, sans effectuer d'opération.

En outre, dans les cas où le CPU constate, à l'issue du cycle de stabilisation, qu'il n'y a pas d'opération à effectuer, il génère le signal HALT et retourne dans le mode d'arrêt HALT. Ainsi, de façon aberrante, le CPU s'active et consomme de la puissance électrique, de manière injustifiée, pendant les cycles de stabilisation alors qu'il s'avère qu'il n'y a pas d'opération à effectuer.

Ainsi, un objectif de la présente invention est de réaliser un microprocesseur comprenant des modes de fonctionnement à faible consommation électrique, sans les inconvénients précités.

Un objectif plus particulier de la présente invention est de réduire la consommation électrique d'un tel microprocesseur pendant les cycles de mode d'arrêt actif, et plus précisément lors des phases de réactivation à l'issue du mode HALT.

Un autre objectif de la présente invention est de limiter la consommation de puissance électrique, si les opérations du CPU n'en nécessitent pas pendant le mode d'exécution.

Enfin, un autre objectif de la présente invention est de faire disparaître les temps morts dus au nombre de cycles de stabilisation des circuits d'oscillateurs dans le fonctionnement des microprocesseurs.

La présente invention vise notamment à réduire les pertes électriques injustifiées pendant la durée du délai de stabilisation du circuit d'oscillateur, sans maintenir en permanence l'alimentation du circuit d'oscillateur qui représente déjà un poste important de consommation électrique, ni perdre la précision associée par principe à cette durée de stabilisation.

Ces objectifs sont atteints par la prévision d'un circuit intégré comprenant une unité centrale cadencée par un signal d'horloge, un circuit d'oscillateur principal fournissant un premier signal d'horloge et un circuit périphérique fournissant un signal d'activation périodique, l'unité centrale comportant un premier mode de fonctionnement à pleine puissance, dans lequel le premier signal d'horloge est appliqué à l'unité centrale, et un mode d'arrêt actif, dans lequel le circuit d'oscillateur principal et l'unité centrale sont désactivés, l'unité centrale étant réactivée par le signal d'activation périodique, le circuit intégré comprenant un circuit d'oscillateur secondaire pour fournir un second signal d'horloge de fréquence inférieure au premier signal d'horloge, et un circuit de gestion de signaux d'horloge agencé pour, lors de la réactivation de l'unité centrale à l'issue du mode d'arrêt actif, activer le circuit d'oscillateur secondaire et appliquer le second signal d'horloge à l'unité centrale de façon à cadencer l'unité centrale à la fréquence du second signal d'horloge et obtenir un deuxième mode de fonctionnement à consommation électrique réduite.

Selon un mode de réalisation, le circuit d'oscillateur principal est désactivé pendant au moins une partie du deuxième mode de fonctionnement, pour réduire la consommation électrique.

Selon un mode de réalisation, le circuit de gestion de signaux d'horloge est agencé pour activer le circuit d'oscillateur secondaire et désactiver le circuit d'oscillateur principal lors de la réactivation de l'unité centrale et durant le deuxième mode de fonctionnement.

Selon un mode de réalisation, le circuit intégré comprend des moyens pour passer du deuxième mode de fonctionnement à consommation électrique réduite au premier mode de fonctionnement à pleine puissance.

Selon un mode de réalisation, le circuit de gestion de signaux d'horloge est agencé pour activer le circuit d'oscillateur principal, désactiver le circuit d'oscillateur secondaire, et appliquer le premier signal d'horloge à l'unité centrale, de façon à passer du deuxième mode de fonctionnement au premier mode de fonctionnement.

Selon un mode de réalisation, le circuit intégré comprend des moyens pour passer du premier mode de fonctionnement au deuxième mode de fonctionnement sans désactiver l'unité centrale.

Selon un mode de réalisation, le circuit de gestion de signaux d'horloge est agencé pour activer simultanément les circuits d'oscillateurs principal et secondaire et pour appliquer le second signal d'horloge à l'unité centrale de façon à obtenir un troisième mode de fonctionnement de transition entre les deux premiers modes de fonctionnement, durant un intervalle de temps de stabilisation.

Selon un mode de réalisation, le circuit de gestion de signaux d'horloge comprend un circuit de commutation pour fournir, soit le premier signal d'horloge, soit le second signal d'horloge, sur l'entrée de signal d'horloge de l'unité centrale, et un circuit de commande comportant des moyens pour activer/désactiver le circuit d'oscillateur principal, des moyens pour activer/désactiver le circuit d'oscillateur secondaire et des moyens pour actionner le circuit de commutation de façon à transmettre le premier ou le second signal d'horloge à l'unité centrale.

Selon un mode de réalisation, le circuit de gestion de signaux d'horloge comporte une sortie d'horloge et est agencé pour présenter les états de commutation suivants un premier état de commutation dans lequel le circuit de gestion fournit le premier signal d'horloge sur la sortie d'horloge ; un deuxième état de commutation dans lequel le circuit de gestion fournit le second signal d'horloge sur la sortie d'horloge ; et un état transitoire entre le premier état et le deuxième état, dans lequel le circuit de gestion ne fournit aucun signal d'horloge sur sa sortie d'horloge, la sortie d'horloge étant mise à un niveau électrique déterminé, afin d'éviter des parasites lors de la transition de commutation entre les deux signaux d'horloge.

Selon un mode de réalisation, le circuit de gestion de signaux d'horloge est agencé pour qu'une commande d'arrêt de l'unité centrale interrompe le mode de fonctionnement en cours et déclenche le mode d'arrêt actif, dans lequel les circuits d'oscillateurs principal et secondaire sont désactivés et aucun signal d'horloge n'est transmis.

Selon un mode de réalisation, le circuit de gestion de signaux d'horloge est agencé pour effectuer une opération de reconfiguration, quand une commande d'arrêt est appliquée alors que le premier signal d'horloge est appliqué à l'unité centrale, dans laquelle le circuit d'oscillateur secondaire est activé et le second signal d'horloge est présélectionné pour être appliqué à l'unité centrale, de façon à se réactiver automatiquement dans le deuxième mode de fonctionnement à consommation électrique réduite à l'issue du mode d'arrêt actif.

Selon un mode de réalisation, le circuit de gestion de signaux d'horloge est agencé pour désactiver les circuits d'oscillateurs principal et secondaire, si et seulement si une commande d'arrêt est appliquée.

Selon un mode de réalisation, le circuit de gestion de signaux d'horloge est commandé par un registre de contrôle de l'unité centrale comprenant un premier drapeau pour activer le circuit d'oscillateur principal, un deuxième drapeau pour activer le circuit d'oscillateur secondaire, et un troisième drapeau pour sélectionner la transmission du premier ou du second signal d'horloge.

Selon un mode de réalisation, le registre de contrôle comprend en outre un drapeau contrôlé par un compteur de cycles de stabilisation qui est actif pendant le troisième mode de fonctionnement.

Selon un mode de réalisation, le circuit d'oscillateur secondaire a une consommation de courant électrique réduite relativement au circuit d'oscillateur principal.

Selon un mode de réalisation, le circuit d'oscillateur secondaire présente un délai de stabilisation minime relativement au circuit d'oscillateur principal.

Selon un mode de réalisation, le circuit d'oscillateur secondaire est de type résistif capacitif.

Ces objets, caractéristiques et avantages ainsi que d'autres de la présente invention seront exposés de façon plus détaillée dans la description suivante d'un exemple de réalisation d'un microprocesseur selon l'invention, faite à titre non limitatif, en relation avec les figures jointes parmi lesquelles :
- la figure 1, précédemment décrite, représente un microprocesseur avec un circuit d'horloge et un circuit de réactivation de type connu ;
- la figure 2 représente un schéma structurel des circuits d'oscillateurs et du circuit de gestion de signaux d'horloge d'un microprocesseur selon l'invention;
- la figure 3 représente un diagramme des états de fonctionnement et des commandes du circuit de gestion de signaux d'horloge dans le microprocesseur, selon l'invention ;
- les figures 4A à 4E représentent des chronogrammes de signaux d'horloge et de réactivation dans le cadre des modes de fonctionnement du microprocesseur, selon l'invention ;
- la figure 5 représente un schéma de principe du circuit de gestion de signaux d'horloge avec les signaux de commande des circuits d'oscillateurs prévus dans le microprocesseur, selon l'invention ;
- les figures 6.1 et 6.2 représentent deux diagrammes des états de fonctionnement et des transitions d'états de deux circuits logiques d'un bloc de commutation de signaux d'horloge prévu dans le circuit de gestion d'horloge, selon l'invention ;
- la figure 7 représente, sous forme de schéma de câblage, un exemple de réalisation des circuits logiques formant un bloc de commutation de signaux d'horloge, d'après l'invention ; et,
- la figure 8 représente un diagramme des modes de fonctionnement et des transitions d'états d'un bloc de commande du circuit de gestion de signaux d'horloge prévu par l'invention.

La figure 2 est un schéma d'ensemble, sous forme de blocs, de la structure d'un microprocesseur selon l'invention. Le microprocesseur comprend un premier circuit d'horloge CKCT1, un second circuit d'horloge CKCT2 et un circuit de gestion de signaux d'horloge ASC.

Le microprocesseur comprend classiquement un circuit de réactivation automatique AWUCT fournissant, à intervalles de temps réguliers, un signal d'interruption de réactivation WUIT appliqué à un circuit de contrôle d'interruption ITC qui transmet un signal d'interruption IT au CPU, comme décrit auparavant en relation avec la figure 1.

Le premier circuit d'horloge CKCT1 comprend, de façon analogue au circuit de la figure 1, un oscillateur OSC1 suivi d'un circuit diviseur PSC1 qui délivre un premier signal d'horloge CK1 de fréquence correspondant à la fréquence nominale de travail du CPU. Ce circuit d'horloge principal comprend de préférence un oscillateur à quartz, ce qui convient pour obtenir des valeurs de fréquence et de précision élevées. En contrepartie de sa précision, cet oscillateur principal OSC1 présente un temps de stabilisation élevé représentant une centaine à plusieurs dizaines de milliers de périodes du signal d'horloge qu'il génère.

Le second circuit d'horloge CKCT2 comprend un circuit d'oscillateur OSC2 relié à un circuit de comptage CNT2 pour délivrer un second signal d'horloge CK2 de fréquence nettement inférieure à la fréquence nominale de travail du CPU qui correspond à la fréquence du premier signal d'horloge CK1. Ce circuit CKCT2 comprend de préférence un oscillateur OSC2 à faible consommation électrique et ne nécessitant quasiment pas de temps de stabilisation pour obtenir l'établissement des oscillations régulières du second signal d'horloge CK2. Le circuit d'horloge secondaire CKCT2 comprend par exemple un circuit d'oscillateur de type RC, à résistance et capacité, ou un circuit d'oscillateur en anneau, formé de plusieurs portes inverseuses connectées en série bouclée sur elle-même.

Le premier signal d'horloge CK1 de fréquence élevée et le second signal d'horloge CK2 de fréquence réduite sont appliqués sur deux entrées du circuit de gestion de signaux d'horloge ASC qui délivre en sortie un signal d'horloge CLK appliqué au CPU pour cadencer son fonctionnement. Le signal HALT délivré par le CPU pour la mise en marche A/M du circuit de réactivation automatique AWUCT, est appliqué parallèlement au circuit de gestion d'horloge ASC. Le signal d'impulsion de base de temps WUIT issu du circuit de réactivation automatique AWUCT est transmis au circuit ASC. C'est le circuit de gestion d'horloge ASC qui contrôle le fonctionnement des deux circuits d'oscillateurs principal OSC1 et secondaire OSC2 en délivrant respectivement, un premier signal EN1 de commande d'activation au premier circuit d'horloge CKCT1 et un second signal EN2 de commande d'activation au second circuit d'horloge CKCT2.

En fonctionnement, le circuit de gestion de signal d'horloge ASC reçoit le signal de commande HALT du CPU ainsi que le signal de réactivation WUIT et a pour fonction d'activer (EN1/EN2) le circuit d'horloge primaire CKCT1 et/ou le circuit d'horloge secondaire CKCT2 et de sélectionner l'une des deux sources de signal d'horloge CK1/CK2 pour l'appliquer en tant que signal d'horloge CLK au CPU afin de cadencer les opérations.

Le circuit de gestion d'horloge ASC permet de mettre en oeuvre plusieurs modes de fonctionnement dans un microprocesseur selon l'invention.

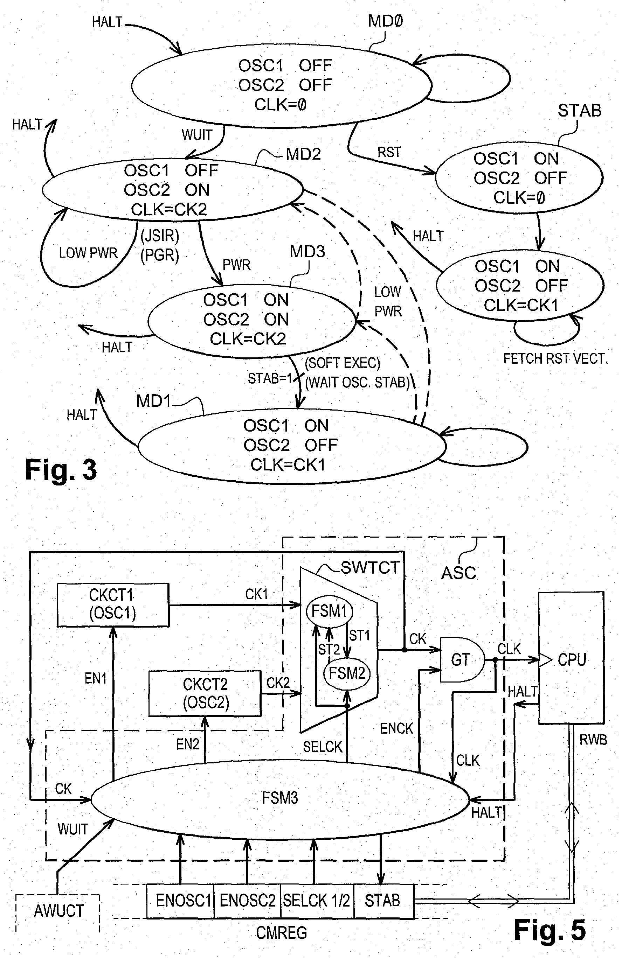

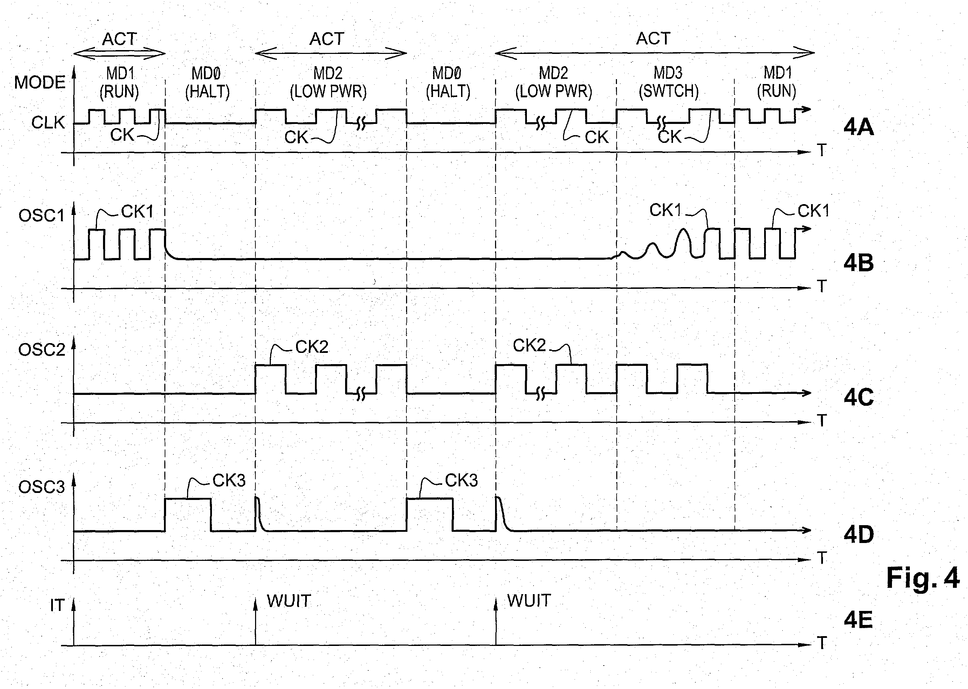

Les divers modes de fonctionnement mis en oeuvre selon l'invention et les transitions entre ces modes apparaissent sur le diagramme d'états de la figure 3 et sur les chronogrammes de la figure 4.

Lorsque le microprocesseur rencontre une instruction HALT au cours de l'exécution MD1 de son programme d'application, il entre dans le mode d'arrêt de fonctionnement MD0 qui correspond à un mode HALT classique. Comme détaillé sur la figure 3, dans le mode MD0, le circuit de gestion d'horloge ASC désactive à la fois l'oscillateur primaire OSC1 et l'oscillateur secondaire OSC2, si bien qu'il n'y a pas de signal d'horloge appliqué au CPU (CLK=0). Le microprocesseur a alors une consommation quasiment nulle, le CPU et tous les circuits périphériques, y compris les circuits de génération d'horloge CKCT1 et CKCT2, étant arrêtés, à l'exception du circuit de réactivation automatique AWUCT.

En cas d'interruption IT dans le mode MD0, notamment lors de l'interruption interne WUIT marquant la fin de l'intervalle de temps régulier de réactivation automatique, le microprocesseur entre dans un mode de fonctionnement MD2 à faible consommation électrique (LOW PWR).

Dans le mode MD2, l'oscillateur primaire OSC1 reste désactivé (EN1=0), le circuit de gestion d'horloge ASC activant seulement l'oscillateur secondaire OSC2 (EN2=1). Le circuit ASC transmet alors le second signal d'horloge sur l'entrée d'horloge du CPU (CLK=CK2) comme schématisé sur la figure 4. Le fonctionnement du CPU est donc réactivé. En mode MD2, le fonctionnement du CPU est alors cadencé à la fréquence réduite du second signal d'horloge CK2, fréquence inférieure à la fréquence nominale de travail du CPU. Comme la fréquence des opérations du CPU est le facteur essentiel de consommation électrique d'un microprocesseur, le mode MD2 offre avantageusement une consommation électrique réduite relativement au fonctionnement à la fréquence nominale. La consommation électrique d'ensemble du microprocesseur dans le mode de fonctionnement MD2 se trouve en outre réduite par le fait que l'oscillateur principal OSC1, fort consommateur, reste éteint, tandis que l'oscillateur secondaire, seul actif, est avantageusement un oscillateur à faible consommation électrique.

Après la réactivation du CPU dans le mode MD2, celui-ci est en mesure d'effectuer une routine pour vérifier l'état des entrées/sorties et rechercher s'il y a des opérations à effectuer.

En cas d'absence d'opération à effectuer, le CPU peut retourner immédiatement dans le mode HALT pour économiser toute consommation électrique injustifiée. De façon particulièrement avantageuse selon l'invention, le microprocesseur dans le mode de fonctionnement MD2 peut à la fois :
- commencer la routine de vérification dès l'instant de la réactivation du CPU à l'issue du mode HALT, sans attendre de délai de stabilisation, puisque l'oscillateur secondaire OSC2 n'a pas besoin de temps de stabilisation ;
- effectuer la routine de vérification à la fréquence réduite du second signal d'horloge, donc avec une faible consommation électrique ;
- vérifier le plus tôt possible s'il n'y a pas d'opération à effectuer et, le cas échéant,
- retourner immédiatement dans le mode HALT, en épargnant au mieux la consommation électrique lorsqu'il n'y a pas d'opération à effectuer.

Dans le cas contraire, le CPU dans le mode de fonctionnement MD2 effectue un branchement vers une routine de traitement d'interruption JSIR ou vers une routine de programme PGR adéquate pour effectuer les opérations.

La routine de branchement indique si le traitement des instructions doit être effectué à pleine puissance (PWR) ou à puissance réduite (LOW PWR).

Lorsque le traitement ne nécessite pas la puissance nominale (LOW PWR), le CPU reste dans le mode de fonctionnement MD2 dans lequel le circuit de gestion d'horloge ASC active seulement l'oscillateur secondaire et transmet le second signal d'horloge au CPU (CLK=CK2) pour cadencer le fonctionnement à la fréquence réduite du signal CK2.

Lorsque le traitement nécessite la puissance nominale (PWR) du microprocesseur, il est prévu selon l'invention d'activer le fonctionnement à pleine puissance après une phase de fonctionnement dans un mode MD3 de transition (SWTCH).

Dans le mode MD3, comme représenté sur les figures 3 et 4, les deux circuits d'oscillateurs OSC1-OSC2 principal et secondaire sont activés simultanément par le circuit de gestion d'horloge ASC (EN1=EN2=1) . Le circuit ASC sélectionne et transmet uniquement le second signal d'horloge en entrée d'horloge du CPU (CLK=CK2). Par conséquent, dans le mode MD3, le fonctionnement du CPU est cadencé à la fréquence réduite du second signal d'horloge CK2. Pendant cette phase de mode MD3, le régime de l'oscillateur principal OSC1 se stabilise, comme schématisé en figure 4. Au cours du mode de fonctionnement transitoire MD3, le CPU continue d'exécuter les instructions de programme (SOFT EXEC.) à la fréquence réduite CK2, en attendant la fin du délai de stabilisation de l'oscillateur principal OSC1.

Ainsi, de façon particulièrement avantageuse, le nouveau mode de fonctionnement MD3 permet au CPU d'effectuer des opérations pendant le délai de stabilisation de l'oscillateur principal OSC1, et ainsi d'éviter des temps morts durant cette phase.

Lorsque le délai nécessaire pour atteindre le régime établi est écoulé (STAB=1) , le fonctionnement passe dans le mode MD1, correspondant à un mode de fonctionnement normal RUN à la puissance nominale (PWR).

En mode MD1, comme détaillé sur les figures 3 et 4, le circuit de gestion d'horloge ASC maintient l'activation (EN1=1) de l'oscillateur principal OSC1, tandis que l'oscillateur secondaire OSC2 est désactivé (EN2=0) . Le circuit ASC transmet le premier signal d'horloge sur l'entrée d'horloge du CPU (CLK=CK1). Ainsi dans le mode MD1, le fonctionnement du CPU est cadencé à la fréquence nominale du signal d'horloge CK1, donc à pleine puissance.

Le fonctionnement normal à la suite de la commande HALT du microprocesseur selon l'invention comprend donc une séquence de modes de fonctionnement comme suit :
- un cycle MD0 d'arrêt (HALT) dans lequel le circuit ASC désactive tous les circuits d'horloge et donc le fonctionnement du CPU ;
- un nouveau mode de fonctionnement MD2 à consommation électrique réduite (LOW PWR) qui débute dès la fin du mode HALT par l'activation de l'oscillateur secondaire OSC2 et du CPU, le fonctionnement du CPU étant cadencé à la fréquence réduite du second signal d'horloge CK2 ;
- si le CPU a besoin d'effectuer des opérations à la cadence du mode de fonctionnement normal RUN à pleine puissance, le circuit de gestion d'horloge ASC met en oeuvre un mode de fonctionnement transitoire MD3 dans lequel les deux circuits d'horloge CKCT1 et CKCT2 sont activés ; le second signal d'horloge CK2 continue à être appliqué au CPU pour maintenir son fonctionnement à la fréquence réduite CK2, le temps que s'achève le délai de stabilisation STAB du premier signal d'horloge CK1 de fréquence supérieure ;
- Dans ce cas, une fois achevé le délai de stabilisation (STAB=1), le circuit passe dans le mode de fonctionnement MD1 à la puissance nominale (RUN), dans lequel seul l'oscillateur principal OSC1 reste actif (EN1=1). Le circuit ASC désactive (EN2=0) l'oscillateur secondaire OSC2 et transmet le premier signal d'horloge CK1 au CPU pour cadencer son fonctionnement à la fréquence supérieure du signal CK1 correspondant à la puissance nominale de fonctionnement du CPU.

Le CPU peut, au cours de chacun de ces modes de fonctionnement MD2, MD3 et MD1, retourner vers le mode MD0 dès qu'il rencontre une instruction HALT d'arrêt de fonctionnement, c'est-à-dire quand il n'y a plus d'instruction de programme à effectuer.

En outre, il est possible selon l'invention, de repasser directement du mode de fonctionnement MD1 à pleine puissance (RUN) au mode de fonctionnement MD2 à puissance réduite (LOW PWR), sans passer par le mode d'arrêt MD0, lorsque le CPU rentre dans un programme d'application exécutable à puissance réduite (LOW PWR), comme indiqué en ligne pointillée sur la figure 3.

La partie droite du diagramme de la figure 3 indique la possibilité de réactiver le fonctionnement du CPU de manière classique, en cas de réinitialisation RST durant le mode MD0 d'arrêt. La réinitialisation RST peut être provoquée par une interruption (IOIT) d'origine externe (ON/OFF) ou par une interruption (IT) d'origine interne distincte du signal de réactivation WUIT. Dans ce cas RST, la procédure consiste à réactiver uniquement l'oscillateur principal OSC1 puis à attendre l'achèvement du cycle de stabilisation STAB, avant d'appliquer le premier signal d'horloge CK1 au CPU pour amorcer son fonctionnement MD1 à pleine puissance (RUN).

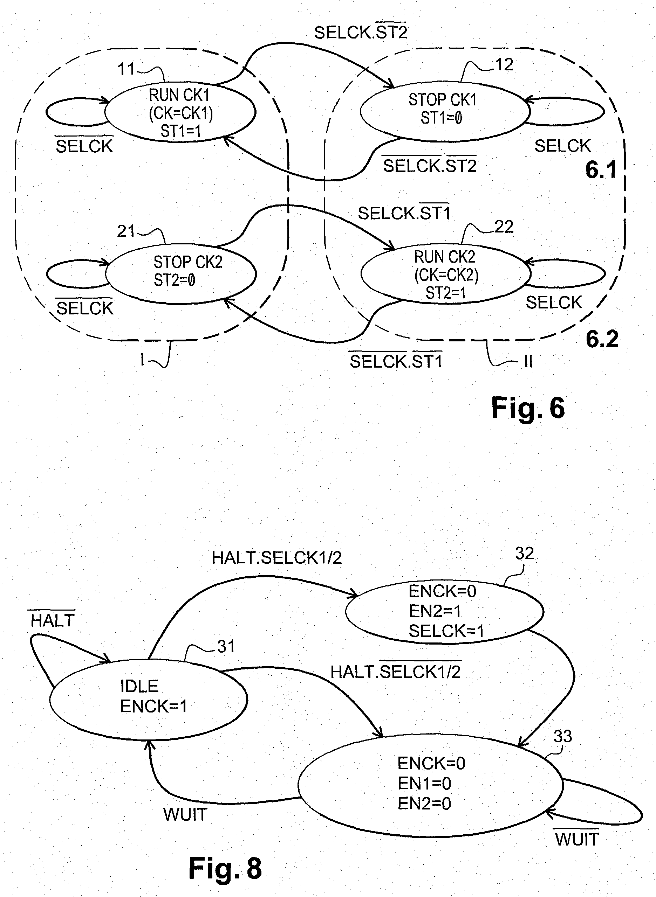

La figure 5 représente un schéma de principe de réalisation du circuit de gestion des signaux d'horloge ASC qui gère l'activation des circuits d'horloge CKCT1/CKCT2 et commande la mise en oeuvre de ces modes de fonctionnement MD0, MD1, MD2, MD3 sous le contrôle du CPU.

Le circuit de gestion d'horloge ASC comprend un bloc de commutation automatique SWTCT comportant deux circuits FSM1 et FSM2 à logique d'états sous le contrôle d'un bloc de commande FSM3. Ces fonctions sont réalisées de préférence sous forme de circuit logique câblé à partir des diagrammes d'états des figures 3-6-8 de façon bien connue de l'homme de l'art.

Le bloc de commande FSM3 est contrôlé par le CPU par l'intermédiaire d'un registre de contrôle de mode CMREG et du signal HALT. Le bloc de commande FSM3 reçoit le signal de réactivation WUIT du circuit AWUCT qui détermine la fin du mode HALT.

Le bloc de commande FSM3 fournit un signal d'activation respectif EN1 et EN2 à chacun des deux circuits d'horloge CKCT1 et CKCT2 qui génèrent à leur tour, respectivement, le premier et le second signal d'horloge CK1 et CK2, lesquels sont appliqués sur deux entrées respectives du bloc de commutation automatique SWTCT.

Le bloc de commande FSM3 délivre un signal de sélection d'horloge SELCK au bloc SWTCT pour changer d'état de commutation FSM1/FSM2 et transmettre en sortie CK un signal d'horloge sélectionné parmi les signaux CK1 et CK2. Le signal d'horloge sélectionné CK est appliqué sur une entrée d'une porte GT de ET logique. La porte logique GT reçoit sur une seconde entrée une commande ENCK du bloc FSM3 et sa sortie est appliquée en entrée d'horloge CLK du CPU. Les signaux d'horloge CK et CLK sont transmis au bloc de commande FSM3 pour synchroniser et vérifier les changements d'états.

Chacun des deux circuits à logique d'état FSM1, FSM2 reçoit respectivement en entrée un signal d'horloge CK1, CK2 et gère la transmission du signal d'horloge respectif CK1, CK2 vers la sortie commune CK. Le premier circuit logique FSM1 a pour fonction d'autoriser ou d'interdire la transmission du premier signal d'horloge CK1 en sortie CK. Le second circuit logique FSM2 a pour fonction d'interdire ou d'autoriser la transmission du second signal d'horloge CK2 en sortie CK.

La figure 6 est un diagramme d'état d'un exemple avantageux de mode de fonctionnement du bloc de commutation automatique SWTCT qui comprend deux circuits à logique d'état FSM1 et FSM2 similaires, représentés respectivement en figure 6.1 et 6.2.

La figure 6.1 représente les deux états 11 et 12 de fonctionnement du circuit logique FSM1.

Dans le premier état 11, le circuit FSM1 délivre le signal CK1 en activant la transmission du premier signal d'horloge (CK=CK1) vers la sortie du circuit SWTCT. Dans cet état actif 11, le circuit FSM1 émet un signal ST1 de niveau logique 1 à destination du second circuit FSM2. Le premier circuit FSM1 demeure dans l'état actif 11 lorsque le signal de sélection d'horloge SELCK émis par le circuit de commande FSM3 est au niveau 0 (condition logique /SELCK).

Lorsque le signal de sélection SELCK passe au niveau 1, le premier circuit FSM1 peut passer du premier état 11 au second état 12, selon les conditions de transitions qui seront revues et détaillées par la suite.

Dans le second état 12, le circuit FSM1 interrompt la transmission du premier signal d'horloge (STOP CK1) et ne délivre pas de signal sur la sortie CK. Dans cet état désactivé 12, le signal ST1 communiqué par le circuit FSM1 au circuit FSM2 est au niveau 0. Le premier circuit FSM1 demeure dans l'état désactivé 12, lorsque le signal de sélection SELCK est au niveau 1 (condition SELCK).

La figure 6.2 représente les deux états 21 et 22 de fonctionnement du second circuit logique FSM2.

Dans le premier état 21, le circuit FSM2 désactive la transmission du second signal d'horloge (STOP CK2) et ne délivre pas de signal sur la sortie CK. Dans cet état désactivé 21, le circuit FSM2 fournit un signal ST2 de niveau 0 destiné au premier circuit FSM1. Le second circuit FSM2 demeure dans l'état désactivé 21 lorsque le signal de sélection d'horloge SELCK émis par le bloc de commande FSM3 est au niveau 0 (condition /SELCK).

Le second circuit FSM2 passe de l'état 21 à l'état 22, lorsque le signal SELCK est au niveau 1 et que le signal ST1 est au niveau 0, correspondant à l'état inactif 12 du premier circuit FSM1 (condition logique SELCK ET /ST1).

Dans le second état 22, le second circuit FSM2 délivre le signal CK2 en activant la transmission du second signal d'horloge sur la sortie commune (CK=CK2). Simultanément, dans cet état actif 22, le circuit FSM2 active le signal ST2 au niveau 1 à destination du premier circuit FSM1. Le second circuit FSM2 demeure dans l'état actif 22 lorsque le signal de sélection d'horloge SELCK émis par le bloc de commande FSM3 est au niveau 1 (condition SELCK).

Les transitions d'états des circuits FSM1 et FSM2 s'effectuent selon la table de conditions logiques suivantes :
- le circuit FSM1 demeure à l'état actif 11 tant que le signal de sélection d'horloge SELCK émis par le circuit FSM3 est au niveau 0 (condition logique /SELCK) ;
- le circuit FSM1 passe de l'état actif 11 à l'état désactivé 12 lorsque le signal SELCK est au niveau 1 et que le signal ST2 est au niveau 0, correspondant à l'état inactif du second circuit FSM2 (condition SELCK ET /ST2);
- le circuit FSM1 demeure à l'état désactivé 12 tant que le signal SELCK est au niveau 1 (condition SELCK).
- le circuit FSM1 repasse de l'état désactivé 12 à l'état actif 11 lorsque le signal SELCK est au niveau 0 et que le signal ST2 est au niveau 0, correspondant à l'état inactif 21 de FSM2 (condition logique /SELCK ET /ST2) ;
- le second circuit FSM2 demeure à l'état désactivé 21 tant que le signal SELCK est au niveau 0 (/SELCK) ;
- le circuit FSM2 passe de l'état désactivé 21 à l'état actif 22 lorsque le signal SELCK est au niveau 1, et que le signal ST1 est au niveau 0 correspondant à l'état désactivé du circuit FSM1 (condition SELCK ET /ST1) ;
- le circuit FSM2 demeure à l'état actif 22 tant que le signal SELCK est au niveau 1 (condition SELCK) ; et,
- le circuit FSM2 repasse de l'état actif 22 à l'état désactivé 21 lorsque le signal SELCK est au niveau 0 et que le signal ST1 est au niveau 0, correspondant à l'état désactivé 12 de FSM1 (condition logique /SELCK ET /ST1) .

Ainsi, tant que le signal SELCK est au niveau 0, les deux circuits FSM1 et FSM2 demeurent dans leur premier état 11 et 21, respectivement, soit l'état actif 11 pour FSM1 et l'état désactivé 21 pour FSM2. De façon complémentaire, tant que le signal SELCK reste au niveau 1, les deux circuits FSM1 et FSM2 demeurent dans leur second état 12 et 22 respectivement, c'est-à-dire l'état désactivé 21 pour FSM1 et l'état actif 22 pour FSM2.

Les deux circuits FSM1 et FSM2 ont donc des modes de fonctionnement étroitement liés, puisqu'ils dépendent des signaux ST1 et ST2 échangés entre eux, ces signaux ST1 et ST2 indiquant leur état de fonctionnement respectif.

Le tableau I ci-après récapitule les changements d'états des circuits FSM1 et FSM2 du bloc de commutation SWTCT, en indiquant quel est l'état final des circuits FSM1 et FSM2 (nouvel état) en fonction de l'état initial des circuits FSM1 et FSM2, ainsi que la valeur des signaux ST1, ST2 et CK correspondant à ces états.

**TABLEAU I**

| **ETATS DU CIRCUIT DE COMMUTATION FSM1-FSM2** | | | | | | | | | |
|---|---|---|---|---|---|---|---|---|---|
| ETAT INITIAL | | | | | COMMANDE FSM3 SELCK | NOUVEL ETAT | | | OBSERVATIONS |
| FSM1 | FSM2 | CK | ST1 | ST2 | | FSM1 | FSM2 | CK | |
| RUN (11) | STOP (21) | CK1 | 1 | 0 | 0 | RUN (11) | STOP (21) | CK1 | Stationnaire (Position I) |
| | | | | | 1 | STOP (12) | STOP (21) | 0 | Etat instable |
| STOP (12) | STOP (21) | 0 | 0 | 0 | 0 | RUN (11) | STOP (21) | CK1 | Passage en Position I |
| | | | | | 1 | STOP (12) | RUN (22) | CK2 | Passage en Position II |
| STOP (12) | RUN (22) | CK2 | 0 | 1 | 0 | STOP (12) | STOP (21) | 0 | Etat instable |
| | | | | | 1 | STOP (12) | RUN (22) | CK2 | Stationnaire (Position II) |
| RUN (11) | RUN (22) | CK1 + CK2 | 1 | 1 | 0 | RUN (11) | RUN (21) | CK1+CK2 | Etat interdit (bloqué) (bloqué) (conflit CK) |
| | | | | | 1 | RUN (11) | RUN (21) | CK1+CK2 | |

Le bloc de commutation SWTCT qui contient ces deux circuits logiques FSM1 et FSM2 à deux états, forme donc un système à quatre états 11, 12, 21, 22 et à quatre combinaisons d'états 11-21, 12-21, 12-22 et 11-22.

Mais, en fait, comme les circuits FSM1 et FSM2 fonctionnent de façon liée, globalement, le bloc de commutation SWTCT présente seulement deux combinaisons d'états stables en fonctionnement, les positions I et II, les autres combinaisons d'états étant transitoires (instables) ou interdites (blocage).

La première position I apparaît à la première ligne du tableau et est indiquée par une ligne pointillée sur la figure 6. Dans cette position I, le premier circuit FSM1 transmet le premier signal d'horloge (CK=CK1) et le signal ST1=1, tandis que le second circuit FSM2 ne transmet pas de signal. Tant que le signal SELCK est au niveau 0, les deux circuits FSM1 et FSM2 restent dans cet état stationnaire 11-21, en position I.

Si, durant cette position I, le signal SELCK est mis au niveau 1, comme indiqué à l'interligne suivante du tableau, le circuit FSM1 interrompt la transmission du premier signal d'horloge (STOP CK1) et désactive le signal ST1=0, dans un premier temps (état 12-21). Mais ce nouvel état est instable (temporaire), comme l'indique la suite du tableau, en quatrième interligne, car la désactivation du signal ST1 (ST1=0) provoque à son tour un changement d'état du circuit FSM2 de l'état désactivé 21 (STOP CK2) vers l'état actif 22 (RUN CK2). Les circuits FSM1-FSM2 du bloc de commutation SWTCT basculent ainsi dans un nouvel état stationnaire 12-22 qui constitue la position II.

La position II se retrouve en sixième interligne du tableau et apparaît cerclée par une ligne pointillée à droite de la figure 6. Dans cette nouvelle position II stable, le premier circuit FSM1 ne transmet pas de signal (STOP CK1) , tandis que le second circuit FSM2 transmet le second signal d'horloge (CK=CK2) et le signal ST2=1.

Cette position II reste stable tant que le bloc de commande FSM3 maintient le signal de sélection SELCK au niveau 1.

Cette position II est abandonnée lorsque le signal SELCK passe au niveau 0 (/SELCK), comme l'indique l'interligne précédente du tableau. Le second circuit FSM2 interrompt alors la transmission du second signal d'horloge (STOP CK2) et désactive le signal ST2, au niveau 0 (état 21), ce qui constitue un nouvel état instable, temporaire, dans lequel la sortie CK ne transmet aucun signal d'horloge et fournit de préférence un signal de sortie nul (CK=0). En effet, comme l'indique précédemment la troisième interligne du tableau, la désactivation du signal ST2 (ST2=0) provoque à son tour un changement d'état du premier circuit FSM1 de l'état désactivé 12 (STOP CK1) à l'état actif 11 (RUN CK1). Le bloc FSM1-FSM2 bascule ainsi en position I qui constitue un état stationnaire 11-21, comme exposé précédemment, en se reportant à la première ligne du tableau.

Ainsi le bloc de commutation automatique SWTCT à deux circuits FSM1-FSM2 présente globalement deux modes de fonctionnement seulement, la position I et la position II. Dans la position I, le premier circuit FSM1 transmet le premier signal d'horloge CK1 en sortie CK, le second circuit FSM2 ne transmettant pas de signal. Cette position I est stable tant que le signal de commande SELCK est au niveau 0 (/SELCK). Il suffit que le bloc de commande FSM3 porte le signal SELCK au niveau 1, pour que le bloc de commutation passe de la position I à la position II après passage par des états transitoires, instables. Dans la position II, le second circuit FSM2 transmet à son tour le second signal d'horloge CK2 en sortie CK, tandis que le premier circuit FSM1 ne transmet pas de signal. Dès que le signal de commande SELCK repasse au niveau 0, le bloc de commutation FSM1-FSM2 retourne de la position II à la position I, en passant par des états transitoires, instables.

De façon avantageuse, le bloc de commutation automatique SWTCT à deux circuits logiques FSM1-FSM2 présente simplement deux modes de fonctionnement I et II, le premier I, dans lequel seul le premier signal d'horloge CK1 est transmis en sortie de signal d'horloge CK, le second II, dans lequel seul le second signal d'horloge CK2 est transmis en sortie de signal d'horloge CK.

De façon avantageuse, dès qu'un circuit FSM1 ou FSM2 est désactivé et ne transmet plus le signal d'horloge respectif CK1 ou CK2, l'autre circuit FSM2 ou FSM1 prend le relais et réactive automatiquement la transmission de l'autre signal d'horloge CK2 ou CK1, respectivement.

Un avantage du bloc SWTCT de commutation automatique de signal d'horloge mis en oeuvre selon l'invention, est que lors des commutations entre les deux modes de fonctionnement I et II, les circuits FSM1-FSM2 passent fugitivement par des états transitoires, dans lesquels aucun signal d'horloge n'est transmis, ce qui évite des rebonds ("glitchs") sur le signal de sortie CK et permet une parfaite transition entre les signaux d'horloge CK1 et CK2 (et réciproquement entre CK2 et CK1).

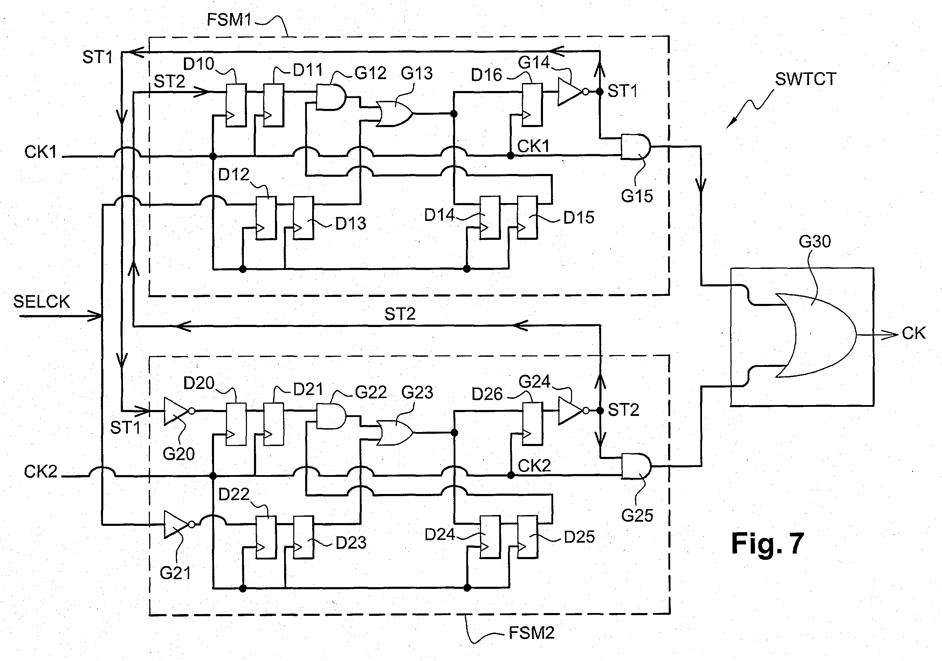

La figure 7 donne un exemple de réalisation détaillée sous forme de plan de câblage électronique de circuits FSM1 et FSM2 à portes logiques et à bascules, qui réalisent les fonctions, les états et les modes de fonctionnement décrits précédemment en relation avec le diagramme d'état de la figure 6, le tableau I des états de commutation et l'exposé du fonctionnement des circuits FSM1-FSM2 du bloc SWTCT de commutation automatique de signaux d'horloge CK1/CK2.

Le circuit FSM1 reçoit en entrée les signaux CK1 et SELCK et délivre le signal de sortie CK ainsi que le signal ST1 à destination du second circuit FSM2, le premier circuit FSM1 recevant lui-même le signal ST2 du second circuit FSM2 comme exposé précédemment. Le circuit FSM1 comprend une série de bascules de verrouillage de type D appariées D10-D11, D12-D13, D14-D15, D16 et une série de portes logiques G12, G13, G14, G15 correspondant à des opérations de type ET logique, OU logique, de porte inverseuse ou de porte ET, selon le cas.

Le circuit FSM2 est quasiment identique au circuit FSM1 et comprend une série de paires de bascules D20-D21, D22-D23,... et une série de portes logiques G22, G23,... identiques et câblées de façon identique aux bascules D10-D11, D12-D13, ... et aux portes logiques G12, G13, ... du circuit FSM1, exception faite de deux portes inverseuses supplémentaires G20 et G21. La porte inverseuse G21 est disposée sur la ligne du signal de commande SELCK et la porte inverseuse G20 est disposée sur la ligne du signal ST1, de sorte que le circuit FSM2 a un mode de fonctionnement complémentaire de celui du circuit FSM1, comme indiqué auparavant en regard des diagrammes d'état 6.1 et 6.2 de la figure 6.

Les deux sorties des circuits FSM1 et FSM2 sont reliées ensemble sur deux entrées respectives d'une porte G30 de OU logique, dont la sortie fournit le signal CK. De façon avantageuse, le signal de sortie CK a un niveau nul (CK=0) lorsque les deux circuits FSM1 et FSM2 sont désactivés (états transitoires 12-21) et ne transmettent aucun signal d'horloge, ni CK1, ni CK2.

Le schéma de la figure 7 permet à l'homme de l'art de comprendre aisément les détails de la réalisation pratique et des modes de fonctionnement opératoire de ce circuit électronique qui ne seront pas détaillés plus avant dans la présente.

D'autres formes de réalisation de circuits électroniques équivalents réalisant les fonctions, les états logiques et les modes de fonctionnement exposés précédemment en relation avec les diagrammes d'états de la figure 6 peuvent être obtenus aisément par l'homme de l'art à l'aide de logiciels de conception de circuit de type VHDL, d'usage courant dans le domaine, sans avoir à entrer ici dans le détail de ces réalisations.

Maintenant, le fonctionnement du bloc FSM3 qui commande les signaux de sélection SELCK, ENCK des circuits FSM1, FSM2 du bloc de commutation SWTCT, ainsi que les signaux d'activation EN1 et EN2 du premier et du second circuits d'horloge CKCT1 et CKCT2 va être détaillé en se reportant aux schémas des figures 5 et 8.

La figure 5 montre que le CPU contrôle le bloc FSM3 par l'intermédiaire d'un registre CMREG de contrôle de mode de fonctionnement contenant des drapeaux ("flags") ENOSC1, ENOSC2, SELCK1/2 et STAB dont les fonctions seront détaillées par la suite.

Le circuit FSM3 fournit les signaux d'activation EN1, EN2 ainsi que les signaux de sélection SELCK, ENCK des signaux d'horloge CK1, CK2, CK, en fonction du contenu des drapeaux ENOSC1, ENOSC2, SELCK1/2 du registre CMREG ainsi qu'en fonction du signal de commande HALT et du signal de réactivation WUIT.

En mode de fonctionnement normal, il est prévu que les signaux de commande EN1, EN2, SELCK et ENCK du circuit de gestion de signaux d'horloge sont sous le contrôle du programme d'application implanté par l'utilisateur dans le microprocesseur. L'état des commandes EN1, EN2, SELCK et ENCK dépend alors essentiellement des drapeaux ENOSC1, ENOSC2, SELCK1/2 et STAB du registre CMREG.

Par contre, dans le mode HALT, le fonctionnement du CPU est arrêté, et le circuit FSM3 commande de façon autonome les signaux d'activation EN1, EN2 et de sélection SELCK, ENCK. En mode arrêt, les signaux de commande EN1, EN2, SELCK et ENCK sont essentiellement déterminés par la commande d'arrêt HALT et le signal de réactivation WUIT reçus par le circuit FSM3 de façon à réactiver automatiquement le fonctionnement du CPU.

La figure 8 représente un diagramme d'état du bloc FSM3 portant plus particulièrement sur les transitions d'états des commandes EN1, EN2, SELCK et ENCK du bloc FSM3 lorsque la commande de désactivation HALT et le signal de réactivation périodique WUIT se produisent.

Initialement, à l'état 31, dans un stade de fonctionnement normal, appelé communément IDLE, les sorties EN1, EN2 et SELCK reproduisent étroitement les commandes des drapeaux ENOSC1, ENOSC2 et SELCK1/2 appliquées par le CPU pour gérer les divers modes de fonctionnement MD1, MD2, MD3 comme détaillé par la suite. Pendant le stade de fonctionnement IDLE le bloc FSM3 délivre un signal d'autorisation ENCK de transmission du signal d'horloge sélectionné CK1/CK2 vers l'entrée d'horloge CLK du CPU.

Lorsque la commande HALT se produit alors que le signal d'horloge sélectionné CK correspond au signal CK2 de l'oscillateur secondaire OSC2 (/SFLCK1/2, soit SELCK1/2=0), le bloc FSM3 désactive immédiatement, à l'étape 33, la transmission du signal d'horloge (ENCK=0) , le premier circuit d'horloge CKCT1 (EN1=0) et le second circuit d'horloge CKCT2 (EN2=0).

Lorsque la commande HALT se produit alors que le signal CK sélectionné correspond au premier signal d'horloge CK1 de l'oscillateur principal OSC1 (SELCK1/2=1), le bloc FSM3 passe par une étape 32 de reconfiguration avant de retourner dans l'étape 33. Dans cette étape intermédiaire 32, la transmission du signal d'horloge CK est désactivée (ENCK=0), l'oscillateur OSC2 du second circuit d'horloge CKCT2 est activé (EN2=1) et le second signal d'horloge CK2 issu de ce circuit CKCT2 est présélectionné (SELCK=1). Dès que la commutation de la sortie CK du circuit SWTCT sur le second signal d'horloge CK2 est obtenue, le bloc FSM3 passe à l'étape 33, dans laquelle tous les signaux EN1, EN2 et ENCK sont mis au niveau 0 pour désactiver les deux circuits d'horloge CKCT1 et CKCT2 ainsi que la transmission du signal CK.

Le bloc FSM3 reste dans cet état 33 tant qu'il n'y a pas de signal de réactivation WUIT (condition /WUIT).

Lorsque le circuit AWUCT délivre le signal d'interruption de réactivation WUIT, le bloc de commande retourne à l'étape initiale 31 qui correspond au stade de fonctionnement normal IDLE lorsqu'il n'y a pas de commande HALT (condition /HALT, soit HALT=0).

Dans le mode de fonctionnement normal IDLE, l'état des signaux d'activation EN1, EN2 et du signal de commutation SELCK correspond sensiblement à l'état des drapeaux ENOSC1, ENOSC2 et SELCK1/2 du registre CMREG représenté figure 5. Ainsi le CPU contrôle directement le mode de fonctionnement en temps normal, en dehors du mode HALT.

Un premier drapeau ENOSC1 commande l'activation de l'oscillateur principal OSC1 par l'intermédiaire du circuit FSM3 qui fournit le signal d'activation EN1 correspondant au premier circuit d'horloge CKCT1.

Un deuxième drapeau ENOSC2 commande l'activation de l'oscillateur secondaire OSC2 par l'intermédiaire du circuit FSM3 qui fournit le signal d'activation EN2 du second circuit d'horloge CKCT2.

Par convention ici, un niveau 1 sur les signaux ENOSC1, ENOSC2, EN1, EN2 et ENCK correspond à un état actif et à l'activation effective du circuit correspondant CKCT1, CKCT2 et GT.

Un troisième drapeau SELCK1/2 contrôle la source de signal d'horloge sélectionnée parmi les signaux d'horloge CK1 et CK2, pour fournir le signal CK, en agissant sur le bloc FSM3 qui commande le signal de sélection SELCK appliqué aux circuits FSM1-FSM2 du bloc de commutation SWTCT. Dans l'exemple présent, les niveaux des états du drapeau SELCK1/2 et du signal SELCK sont inversés. Le niveau 1 du drapeau SELCK1/2 commande la sélection du premier signal d'horloge CK1, ce qui correspond à un signal SELCK de niveau 0 pour que le circuit FSM1 s'active dans l'état 11 (position I) dans lequel le signal CK1 est transmis vers la sortie CK. Inversement, le niveau 0 du drapeau SELCK1/2 commande la sélection du second signal d'horloge CK2 ce qui correspond à un signal SELCK de niveau 1 pour que le circuit FSM2 passe dans l'état 22 (CK=CK2).

Les drapeaux ENOSC1, ENOSC2 et SELCK1/2 sont accessibles au moins en écriture par le CPU.

Enfin, un quatrième drapeau STAB, accessible en lecture par le CPU, indique lorsque le délai du processus de stabilisation est achevé. Le contenu du drapeau d'indication STAB est chargé par un compteur d'impulsions (non représenté) cadencé par le second signal d'horloge CK2. Le compteur est réinitialisé et le contenu du drapeau STAB est remis à 0 lorsque l'un des oscillateurs OSC1 ou OSC2 est arrêté. Le drapeau STAB est maintenu au niveau 0 tant que le premier oscillateur OSC1 est désactivé pendant le mode de fonctionnement MD2 (cf. Fig. 3) puis reste au niveau 0 dans le mode MD3 pendant que la valeur du compteur s'incrémente. Dès que la valeur du compteur atteint un nombre fixé de cycles CK2 déterminant la durée du délai de stabilisation, le compteur met le drapeau STAB au niveau 1, de sorte que le circuit peut passer au mode de fonctionnement MD1 (RUN) comme représenté figure 3.

Le tableau II ci-après détaille les modes de fonctionnement et les états des signaux délivrés par le bloc de commande FSM3 en fonction de l'état des drapeaux du registre CMREG contrôlé par le CPU lors du fonctionnement normal IDLE.

**TABLEAU II**

| ETAT DES DRAPEAUX DU REGISTRE DE CONTROLE DU CPU | | | | MODE DE FONCTIONNEMENT | SIGNAUX DU BLOC DE COMMANDE FSM3 | | | |
|---|---|---|---|---|---|---|---|---|
| ENOSC1 | ENOSC2 | SELCK1/2 | STAB | | EN1 | EN2 | SELCK | CK |
| X | X | X | 0 (RESET) | MD0 (HALT) | 0 | 0 | X | 0 |
| 1 | 0 | 0 (interdit) 1 | 0 (RESET) | MD1 (RUN) | 1 | 0 | 0 | CK1 |
| 0 | 1 | 0 (interdit) 1 | 0 (RESET) | MD2 (LOW PWR) | 0 | 1 | 1 | CK2 |
| 1 | 1 | 0 | 0 (CNT) | MD3 (SWITCH) | 1 | 1 | 1 | CK2 |
| | | 0 | 1 | Passage de MD3 à MD1 (RUN) | 1 | 1 | 1 | CK2 |
| | | 1 | 1 | | 1 | 1 | 0 | CK1 |

Il est prévu que le circuit du registre CMREG n'autorise pas le CPU à mettre simultanément les drapeaux ENOSG1 et ENOSC2 au niveau 0 simultanément. Le cas échéant, le registre CMREG conserve les anciennes valeurs X des drapeaux ENOSC1 et ENOSC2, si bien qu'au moins l'un des drapeaux ENOSC1 et/ou ENOSC2 est au niveau 1. Cette consigne permet d'activer automatiquement l'un des deux oscillateurs OSC1 ou OSC2 lorsque le CPU se réveille en sortie de mode HALT.

Par contre, dans le mode HALT précisément, comme exposé auparavant en regard de l'étape 33 de la figure 8, le circuit de commande FSM3 met les deux signaux EN1 et EN2 au niveau 0, ce qui désactive effectivement les deux oscillateurs OSC1 et OSC2 simultanément, même si au moins l'un des drapeaux ENOSC1, ENOSC2 conserve une consigne de niveau 1. Le CPU ne reçoit alors aucun signal d'horloge CLK (CK=0) et son fonctionnement est arrêté.

A la sortie du mode HALT déclenchée par l'interruption WUIT ou RST, le circuit FSM3 retrouve ainsi la valeur de consigne des drapeaux ENOSC1 et ENOSC2 conservée dans le registre CMREG.

Le tableau II indique les modes de fonctionnement obtenus en fonction de l'état des drapeaux ENOSC1, ENOSC2 et SELCK1/2 du registre CMREG contrôlé par le CPU, lorsque celui-ci est actif au stade de fonctionnement normal IDLE, en l'absence de commande de mode HALT.

Lorsque le registre CMREG contient des drapeaux ENOSC1 au niveau 1 et ENOSC2 au niveau 0 et que le drapeau SELCK1/2 est au niveau 1, le bloc de commande FSM3 active seulement le premier circuit d'horloge CKCT1 (EN1=1, EN2=0) et sélectionne (SELCK=0) la transmission du premier signal d'horloge CK1 au CPU qui travaille alors à sa fréquence nominale. Le microprocesseur est alors dans le premier mode de fonctionnement MD1 à la puissance nominale (RUN).

Le circuit du registre CMREG empêche de sélectionner un signal d'horloge (SELCK1/2) si l'oscillateur correspondant n'est pas activé (ENOSC1/ENOSC2).

Lorsque le registre CMREG contient des drapeaux ENOSC1 au niveau 0 et ENOSC2 au niveau 1 et que le drapeau SELCK1/2 est au niveau 0, le bloc de commande FSM3 active seulement le second circuit d'horloge CKCT2 (EN1=0, EN2=1) et sélectionne (SELCK=1) la transmission au CPU du second signal d'horloge CK2, par conséquent. Le microprocesseur est alors dans le deuxième mode de fonctionnement MD2 à faible consommation (LOW PWR).

Pour changer de mode de fonctionnement, le CPU met les drapeaux ENOSC1 et ENOSC2 au niveau 1. Le bloc de commande FSM3 active alors les deux circuits d'horloge CKCT1 et CKCT2 (EN1=EN2=1) et maintient la transmission du second signal d'horloge CK2 (SELCK=1) au CPU. Le microprocesseur est alors dans le troisième mode de fonctionnement MD3 de transition entre le mode MD2 et le mode MD1. Durant ce mode transitoire MD3, le bloc FSM3 active le compteur du délai de stabilisation (STAB), auparavant réinitialisé.

L'état du drapeau STAB indique au CPU quand le comptage du délai de stabilisation est atteint (STAB=1).
Le CPU modifie alors l'état du drapeau SELCK1/2 de sélection d'horloge (SELCK1/2=1) . Le bloc FSM3 sélectionne (SELCK=0) la transmission du premier signal d'horloge CK1 au CPU. Le microprocesseur passe ainsi du mode transitoire MD3 au mode de fonctionnement MD1 à pleine puissance (RUN). Pour achever le passage au mode MD1, le CPU remet le drapeau ENOSC2 au niveau 0.

Le schéma de câblage électronique du circuit logique FSM3 réalisant ces états logiques et ces modes de fonctionnement contient de l'ordre d'une centaine de portes logiques et ne peut être détaillé dans le cadre de la présente.

Des formes de réalisation de circuits logiques permettant d'obtenir de telles fonctions, états et modes de fonctionnement, pourront être obtenues, de manière conventionnelle par l'homme de l'art, à l'aide des logiciels de conception assistée de circuits électroniques, de type VHDL, d'usage courant dans le domaine, à partir du diagramme d'état de la figure 8 et du tableau des états de commande II.

Bien entendu, les niveaux d'état 0 ou 1 des signaux de commande et des drapeaux ont été indiqués dans la présente uniquement à titre d'exemple non limitatif et il est clair que le circuit selon l'invention peut être réalisé avec d'autres combinaisons d'états et de niveaux de signaux.

Plus généralement, le circuit de gestion d'horloge selon l'invention peut permettre d'autres transitions entre les modes de fonctionnement MD0, MD2, MD3 et MD1.

Ainsi, comme schématisé en ligne pointillée sur la figure 3, le CPU peut revenir du mode de fonctionnement MD1 à puissance nominale au mode de fonctionnement MD2 à puissance réduite, lorsque le traitement des opérations ne requiert pas toute la puissance du CPU. Cette transition du mode MD1 au mode MD2 peut se faire en repassant par le mode transitoire MD3, ou même directement de façon avantageuse puisque l'oscillateur secondaire OSC2 ne nécessite pas de temps de stabilisation.

En outre, selon une autre alternative, lors de la réactivation WUIT à l'issue du mode MD0 d'arrêt HALT, le circuit de gestion de signaux d'horloge peut entrer directement dans le mode de fonctionnement MD3, en réactivant simultanément les deux oscillateurs OSC1 et OSC2, de façon à ce que le CPU entre dans le mode MD1 à pleine puissance (RUN) sans perte de temps après la réactivation.

D'autres alternatives, modes de réalisations et améliorations apparaîtront à l'homme de l'art sans sortir du cadre de la présente invention.

## Revendications

1. Circuit intégré comprenant une unité centrale (CPU) cadencée par un signal d'horloge (CLK), un circuit d'oscillateur principal (OSC1) fournissant un premier signal d'horloge (CK1) et un circuit périphérique (AWUCT) fournissant un signal d'activation périodique (WUIT), l'unité centrale comportant :
- un premier mode de fonctionnement à pleine puissance, dans lequel le premier signal d'horloge est appliqué à l'unité centrale, et
- un mode d'arrêt actif, dans lequel le circuit d'oscillateur principal et l'unité centrale sont désactivés, l'unité centrale étant réactivée par le signal d'activation périodique,
**caractérisé en ce qu'**il comprend un circuit d'oscillateur secondaire (OSC2) pour fournir un second signal d'horloge (CK2) de fréquence inférieure au premier signal d'horloge, et un circuit (ASC) de gestion de signaux d'horloge agencé pour, lors de la réactivation de l'unité centrale à l'issue du mode d'arrêt actif, activer le circuit d'oscillateur secondaire et appliquer le second signal d'horloge à l'unité centrale de façon à cadencer l'unité centrale à la fréquence du second signal d'horloge et obtenir un deuxième mode de fonctionnement à consommation électrique réduite.

2. Circuit intégré selon la revendication 1, dans lequel le circuit d'oscillateur principal est désactivé pendant au moins une partie du deuxième mode de fonctionnement, pour réduire la consommation électrique.

3. Circuit intégré selon l'une des revendications 1 et 2, dans lequel le circuit de gestion de signaux d'horloge est agencé pour activer le circuit d'oscillateur secondaire (OSC2) et désactiver le circuit d'oscillateur principal (OSC1) lors de la réactivation (WUIT) de l'unité centrale et durant le deuxième mode de fonctionnement.

4. Circuit intégré selon l'une des revendications 1 à 3, comprenant des moyens pour passer du deuxième mode de fonctionnement à consommation électrique réduite au premier mode de fonctionnement à pleine puissance.

5. Circuit intégré selon la revendication 4, dans lequel le circuit de gestion de signaux d'horloge est agencé pour :
- activer le circuit d'oscillateur principal (OSC1),
- désactiver le circuit d'oscillateur secondaire (OSC2), et
- appliquer le premier signal d'horloge à l'unité centrale, de façon à passer du deuxième mode de fonctionnement au premier mode de fonctionnement.

6. Circuit intégré selon l'une des revendications 1 à 5, comprenant des moyens pour passer du premier mode de fonctionnement au deuxième mode de fonctionnement sans désactiver l'unité centrale.

7. Circuit intégré selon l'une des revendications 1 à 6, dans lequel le circuit de gestion de signaux d'horloge est agencé pour activer simultanément (EN1, EN2) les circuits (OSC1, OSC2) d'oscillateurs principal et secondaire et pour appliquer le second signal d'horloge (CK2) à l'unité centrale de façon à obtenir un troisième mode de fonctionnement de transition entre les deux premiers modes de fonctionnement, durant un intervalle de temps de stabilisation (STAB).

8. Circuit intégré selon l'une des revendications 1 à 7, dans lequel le circuit de gestion de signaux d'horloge (ASC) comprend :
- un circuit de commutation (SWTCT) pour fournir, soit le premier signal d'horloge (CK1), soit le second signal d'horloge (CK2), sur l'entrée de signal d'horloge (CK, CLK) de l'unité centrale, et
- un circuit de commande (FSM3) comportant des moyens (EN1) pour activer/désactiver le circuit d'oscillateur principal (OSC1), des moyens (EN2) pour activer/désactiver le circuit d'oscillateur secondaire (OSC2) et des moyens (SELCK) pour actionner le circuit de commutation de façon à transmettre le premier ou le second signal d'horloge (CK1/CK2) à l'unité centrale.

9. Circuit intégré selon l'une des revendications 1 à 8, dans lequel le circuit de gestion de signaux d'horloge comporte une sortie d'horloge (CK) et est agencé pour présenter les états de commutation suivants:
- un premier état de commutation (I) dans lequel le circuit de gestion fournit le premier signal d'horloge (CK1) sur la sortie d'horloge (CK) ;
- un deuxième état de commutation (II) dans lequel le circuit de gestion fournit le second signal d'horloge (CK2) sur la sortie d'horloge (CK) ; et
- un état (12-21) transitoire entre le premier état (I) et le deuxième état (II), dans lequel le circuit de gestion ne fournit aucun signal d'horloge sur sa sortie d'horloge (CK), la sortie d'horloge étant mise à un niveau électrique déterminé (CK=0), afin d'éviter des parasites lors de la transition de commutation entre les deux signaux d'horloge (CK1/CK2, CK2/CK1).

10. Circuit intégré selon l'une des revendications 1 à 9, dans lequel le circuit de gestion de signaux d'horloge (ASC) est agencé pour qu'une commande d'arrêt (HALT) de l'unité centrale interrompe le mode de fonctionnement en cours et déclenche le mode d'arrêt actif, dans lequel les circuits d'oscillateurs (OSC1, OSC2) principal et secondaire sont désactivés et aucun signal d'horloge n'est transmis (CK=0).

11. Circuit intégré selon l'une des revendications 1 à 10, dans lequel le circuit de gestion de signaux d'horloge est agencé pour effectuer une opération de reconfiguration, quand une commande d'arrêt (HALT) est appliquée alors que le premier signal d'horloge (CK1) est appliqué à l'unité centrale, dans laquelle le circuit d'oscillateur secondaire (OSC2) est activé (EN2) et le second signal d'horloge (CK2) est présélectionné (SELCK) pour être appliqué à l'unité centrale, de façon à se réactiver automatiquement dans le deuxième mode de fonctionnement à consommation électrique réduite à l'issue du mode d'arrêt actif.

12. Circuit intégré selon l'une des revendications 1 à 11, dans lequel le circuit de gestion de signaux d'horloge (ASC) est agencé pour désactiver (/EN1, /EN2) les circuits d'oscillateurs (OSC1, OSC2) principal et secondaire, si et seulement si une commande d'arrêt (HALT) est appliquée.

13. Circuit intégré selon l'une des revendications 1 à 12, dans lequel le circuit de gestion de signaux d'horloge (ASC) est commandé par un registre (CMREG) de contrôle de l'unité centrale (CPU) comprenant :
- un premier drapeau (ENOSC1) pour activer le circuit d'oscillateur principal (OSC1),
- un deuxième drapeau (ENOSC2) pour activer le circuit d'oscillateur secondaire (OSC2), et
- un troisième drapeau (SELCK1/2) pour sélectionner la transmission du premier ou du second signal d'horloge (CK1/CK2).

14. Circuit intégré selon la revendication 13, dans lequel le registre de contrôle (CMREG) comprend en outre un drapeau (STAB) contrôlé par un compteur de cycles de stabilisation qui est actif pendant le troisième mode de fonctionnement.

15. Circuit intégré selon l'une des revendications 1 à 14, dans lequel le circuit d'oscillateur secondaire (OSC2) a une consommation de courant électrique réduite relativement au circuit d'oscillateur principal (OSC1).

16. Circuit intégré selon l'une des revendications 1 à 15, dans lequel le circuit d'oscillateur secondaire (OSC2) présente un délai de stabilisation minime relativement au circuit d'oscillateur principal (OSC1).

17. Circuit intégré selon l'une des revendications 1 à 16, dans lequel le circuit d'oscillateur secondaire (OSC2) est de type résistif capacitif (RC).
